# EUROPEAN PATENT SPECIFICATION

(11) **EP 3 023 189 B1**
(45) Date of publication and mention of the grant of the patent: **10.10.2018**
(21) Application number: 15180427.5
(22) Date of filing: 10.08.2015
(51) Int. Cl.: C22C 21/00, C22C 21/08, B23K 35/28, C22C 21/04, B32B 15/00, B23K 35/38, B23K 35/02, B32B 15/01, C22C 21/02

(54) **BRAZING SHEET FOR SURFACE JOINING**
LÖTBLECH ZUR VERBINDUNG VON OBERFLÄCHEN
FEUILLE DE BRASAGE POUR JONCTION DE SURFACE

(30) Priority: 08.08.2014 JP 2014162201; 11.09.2014 JP 2014184767
(43) Date of publication of application: 25.05.2016
(73) Proprietor: UACJ Corporation, Tokyo 100-0004 (JP)
(72) Inventor: ITOH, Yasunaga, Chiyoda-ku, Tokyo 1000004 (JP); SAKODA, Shoichi, Chiyoda-ku, Tokyo 1000004 (JP); YAMAYOSHI, Tomoki, Chiyoda-ku, Tokyo 1000004 (JP); OHASHI, Yusuke, Chiyoda-ku, Tokyo 1000004 (JP)
(74) Representative: Hamer, Christopher K.

(56) References cited:
- EP-A1- 2 436 791
- WO-A1-2013/065760
- WO-A1-2013/105637
- WO-A1-2014/097820
- JP-A- 2012 050 993
- JP-A- 2013 086 103
- JP-A- 2014 114 475
- JP-B1- 5 456 920
- US-A1- 2009 162 686

## Description

### TECHNICAL FIELD

The present invention generally relates to a brazing sheet for surface joining, and more particularly relates to a brazing sheet used for surface joining of two aluminum members made of aluminum or an aluminum alloy, which brazing sheet is placed at a joint interface between the two aluminum members, and permits the two aluminum members to be joined together without joint defects.

### BACKGROUND ART

Brazing has been widely used as a joining process to obtain a product such as a heat exchanger, a mechanical component or the like, which is made of an Al (including aluminum and aluminum alloy) material and which has a number of minute joints. To perform brazing, a brazing filler metal is used together with a constituent member of the intended heat exchanger, mechanical component or the like. The filler metal is used in the form of a brazing sheet obtained by cladding the filler metal on one surface or opposite surfaces of a core material of the constituent member, and supplied to portions to be joined together. A brazing operation is performed by melting the filler metal, such that the molten filler metal forms a fillet at a joint, or joins together closely fitted surfaces.

In the brazing operation of major joints of the heat exchanger, the mechanical component or the like (hereinafter referred to as a "product"), the filler metal is supplied from the constituent member, as described above. However, in a case where a component which does not have the filler metal is assembled with respect to a part of the product to be obtained, in which part the filler metal is not present, it is necessary to place the filler metal at a joint interface between the above-described component and the above-described part, in order to perform surface joining of the component within a heating furnace, concurrently with the brazing operation of the above-described major joints. For instance, in order to perform surface joining of a component embedded within the product, a thin sheet of the filler metal is placed at a joint interface between the component and the product. Hereinafter, the filler metal placed at the joint interface as described above is referred to as a "pre-placed filler metal".

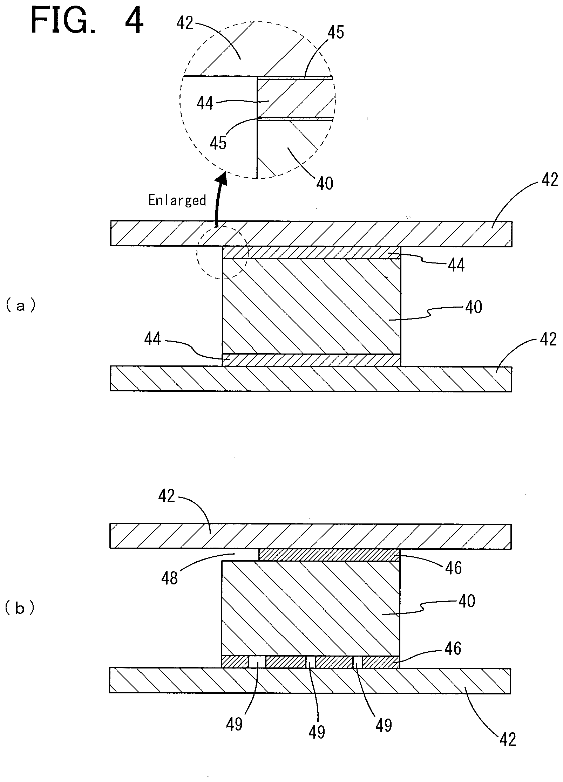

The pre-placed filler metal placed between two Al members and used to join together corresponding surfaces of the respective Al members is generally used in the form of a sheet. In this respect, it is noted that entire surfaces (opposite major surfaces) of the sheet of the pre-placed filler metal are covered with films of an oxide of the filler metal. Accordingly, unless the oxide films are completely destructed, the molten filler metal tends to unevenly flow over the joint interface, giving rise to an inherent problem of difficulty in obtaining a sound joint. Therefore, in a brazing process using a flux, the pre-placed filler metal or portions of the Al members to be joined together is/are coated with the flux, to assure bondability between the brazed surfaces of the Al members. Specifically descried, in the brazing process practiced to join together two Al sheets 42 and 42 having a predetermined thickness and an Al component 40 in the form of a block, the Al sheets 42 and 42 are pressed onto respective opposite surfaces of the Al component 40, and pre-placed filler metals 44 and 44 in the form of sheets are placed between the Al sheets 42 and 42 and the Al component 40, as shown in Fig. 4(a). In this respect, it is noted that opposite surfaces of each of the pre-placed filler metals 44 are coated with a suitable flux, so that flux layers 45 and 45 are formed on the respective opposite surfaces of each of the filler metals 44. The Al component 40 and the Al sheets 42 and 42 are heated and joined together by brazing. However, this brazing process has a risk of occurrence of joint defects such as a local joint defect in the form of a gap 48, or voids 49 produced by the vaporized flux, in surface-joined portions (brazed portions) 46 and 46 formed between the Al component 40 and the respective Al sheets 42 and 42, as shown in Fig. 4(b).

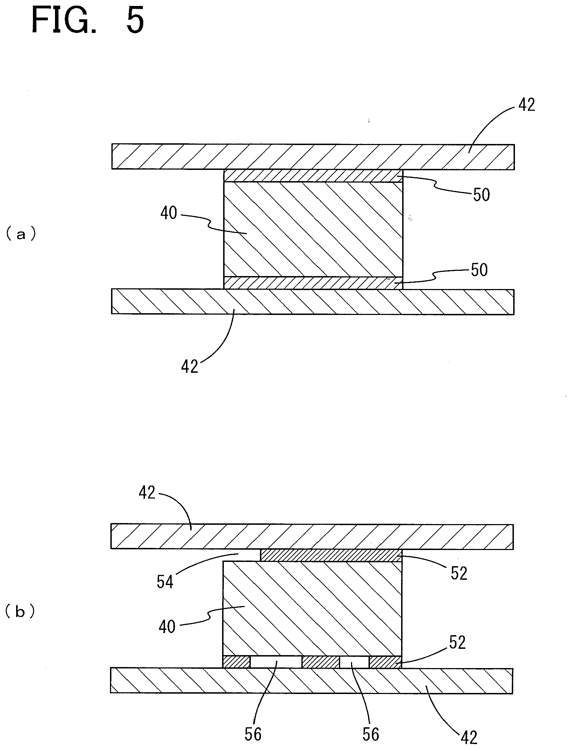

On the other hand, in a vacuum brazing process in which brazing is performed in a vacuum (at a reduced pressure) without using the flux, or in a fluxless brazing process in which brazing is performed in an inert gas without using the flux, the oxide films covering the surfaces of the pre-placed filler metal are not sufficiently destructed, so that there arises a problem that large-area joint defects are caused in surface-joined portions 52 and 52, as shown in Fig. 5(b), due to uneven flows of the molten filler metal. Namely, in the vacuum brazing process and the fluxless brazing process, which are practiced to join together the Al sheets 42 and 42 having the predetermined thickness and the Al component 40 in the form of a block, pre-placed filler metals 50 and 50 in the form of sheets which are not coated with the flux are disposed on the respective opposite surfaces of the Al component 40, and the Al sheets 42 and 42 are pressed onto the respective filler metals 50 and 50, as shown in Fig. 5(a). When the Al component 40 and the Al sheets 42 and 42 are heated in the vacuum or the inert gas, and joined together by brazing, a local joint defect in the form of a gap 54 and internal joint defects in the form of unjoined portions 56 tend to be generated in the surface-joined portions 52 and 52 formed between the Al component 40 and the respective Al sheets 42 and 42, as shown in Fig. 5(b). Therefore, in the case of employing the vacuum brazing process and the fluxless brazing process to perform surface joining of the Al members 40 and 42 by using the pre-placed filler metal 50, a sufficient care should be exercised in terms of a way to press (hold) together the Al members, and a temperature control during the processes. As a result, the cost of production is undesirably increased.

In order to overcome deficiencies of the brazing processes using the pre-placed filler metals 44 and 50 described above, it is considered to use a double-sided brazing sheet obtained by cladding the filler metal on each of opposite surfaces of an Al core material, rather than using the filler metal alone. In the brazing sheet, the filler metal and the core material are metallurgically bonded to each other at their interfaces, before the brazing sheet is used for brazing. Accordingly, a bond obtained by using the brazing sheet is superior to a bond obtained by using the filler metal alone. However, the use of the brazing sheet as the pre-placed filler metal has inherent problems described below.

Namely, in production of the double-sided brazing sheet, the filler metal and the core material are provided in the form of cast slabs, or thick plates obtained by rolling the cast slabs. The filler metal and the core material are superposed on each other, such that the filler metal (a skin material) is superposed on each of the opposite surfaces of the core material. Then, the thus obtained stack of the skin materials and the core material is subjected to a heating and rolling operation at 450-500°C to pressure-weld the skin materials and the core material at interfaces between them. At this time, where the skin materials have an extremely large thickness, the skin materials and the core material do not sufficiently slide at the interfaces during the rolling operation, so that it is difficult to join together the skin materials and the core material. Therefore, in the brazing sheet obtainable in practical factory production, the highest possible clad percentage of each of the skin materials [(thickness of the skin material / thickness of the brazing sheet as a whole) x 100%] is lower than 25%, and generally lower than 20%. In other words, the thickness of the core material of the conventional brazing sheet is not smaller than 50% of the entire thickness of the brazing sheet. On the other hand, the thickness of the pre-placed filler metal to be placed at the joint interface is generally limited. In production of precision products, the pre-placed filler metal having a thickness of about 50µm is often used. Accordingly, where the above-described brazing sheet having the clad percentage of the skin material of lower than 20% is used as the pre-placed filler metal for surface joining, an amount of the filler metal is insufficient, so that defects are likely to be caused in surface-joined portions.

In this respect, JP-A-8-309896 proposes a brazing sheet having a total clad percentage of the filler metal of 40-95%, as the pre-placed filler metal for surface joining. This publication describes that the core material is divided into segments by the molten filler metal, such that the segments of the core material are dispersed in the molten filler metal, whereby bondability between brazed surfaces is improved. However, it is noted that irrespective of whether or not the core material is divided into the segments, the molten filler metal flows toward points at which joining starts, and joined areas expand from those points. Accordingly, in the case where the joining start points described above are unevenly distributed over the joint interface, the molten filler metal unevenly flows over the joint interface, giving rise to a risk of generation of a large-sized unjoined area.

JP 2012-050993 discloses an Al-Si brazing system for fluxless brazing at atmosphere pressure, wherein the system comprises an aluminium clad material and Al-Si based brazing material which is an Al alloy containing, by mass, 0.1 to 5.0% of Mg, 3 to 13% of Si and 0.001 to 0.1% of Be, and Al-Si intermetallic compounds having a circle equivalent diameter of 1.0 µm or more in a surface layer direction, totalling in a range of 1,000 to 100,000 pieces/mm².

WO 2013/065760 discloses an aluminum alloy clad material comprising an aluminum alloy core material, an aluminum alloy surface material cladded on one or both sides of the core material with an aluminum alloy insert material interposed therebetween, and the thickness of the surface material cladding for one side being from 3 to 30% of the total sheet thickness; the core material containing, by mass, Mg: 0.2 to 1.5%, Si: 0.2 to 2.5%, Cu: 0.2 to 3.0%, and the remainder being Al and inevitable impurities; the surface material including Mg: 0.2 to 1.5%, Si: 0.2 to 2.0%, Cu being restricted to 0.1% or smaller, and the remainder being Al and inevitable impurities; and the aluminum alloy insert material having a solidus temperature of 590 °C or lower.

As described above, the brazing processes practiced for surface-joining Al members by using the pre-placed filler metal have various inherent problems. Therefore, the brazing processes using the pre-placed filler metal as described above are difficult to be used for performing surface joining in production of the heat exchanger which requires a precise control to assure desired thermal conductivity between the components to be joined together, and a product including an outer component which is required to be joined to the main part of the product with a bonding strength not lower than a predetermined level.

### PRIOR ART DOCUMENT

### PATENT DOCUMENT

Patent Document 1: JP-A-8-309896
Patent Document 2: JP 2012-050993
Patent Document 3: WO 2013/065760

### SUMMARY OF THE INVENTION

### TECHNICAL PROBLEM

The present invention was made in order to overcome the deficiencies of the conventional pre-placed filler metal for surface joining described above. Therefore, it is a first object of the present invention to provide a brazing sheet for surface joining, which brazing sheet is placed at a joint interface between two Al members to join together the two Al members by brazing, and makes it possible to advantageously achieve a sound state of surface joining of the Al members. It is a second object of the present invention to provide a brazing process for joining together two Al members, which process makes it possible to advantageously achieve a sound state of surface joining of the Al members.

### SOLUTION TO PROBLEM

The above-described first object of the present invention is achieved according to a first aspect of the present invention which provides a brazing sheet for surface joining configured to be placed at a joint interface between two Al members in order to join together the two Al members by a fluxless brazing process practiced in an inert gas atmosphere, characterized in that: the brazing sheet is an aluminum brazing sheet in which a filler metal is cladded on each of opposite surfaces of a core material consisting of aluminum or an aluminum alloy optionally containing 0.2-1.6% by mass of Mg; the filler metal consists of an aluminum alloy consisting of 3.5-6.5% by mass of Si, at least one of 0.004-0.1% by mass of Li, 0.002-0.05% by mass of Be, 0.05-0.4% by mass of Mg and 0.004-0.2% by mass of Bi, and the balance of aluminum and inevitable impurities; and a clad percentage of the filler metal cladded on each of the opposite surfaces of the core material is not lower than 35%.

In another preferable form of the brazing sheet of the present invention, a clad percentage of the core material is 5-30%.

The above-described second object of the present invention is achieved according to a second aspect of the present invention which provides a brazing process for surface joining two Al members by using the brazing sheet according to the present invention.

### ADVANTAGEOUS EFFECTS OF THE INVENTION

In the brazing sheet for surface joining according to the present invention, the filler metal cladded on each of the opposite surfaces of the Al core material consists of the aluminum alloy containing 3.5-6.5% by mass of Si and the specific amounts of the other alloy components. Further, the filler metal is cladded on each of the opposite surfaces of the Al core material with the clad percentage of not lower than 35%. Accordingly, where the brazing operation is performed by placing the brazing sheet at the joint interface between the two Al members to be joined together, oxide films covering surfaces of the filler metal can be effectively destructed, and one of the two Al members which is an intermediate member or an outer member can be precisely and easily joined to the other Al member which does not have a filler metal layer.

Further, as for the brazing sheets according to the present invention, which brazing sheets are configured to be used for fluxless brazing process practiced in an inert gas atmosphere the brazing sheets make it possible to easily achieve a sound state of surface joining of the Al members without deficiency of the filler metal.

By using the brazing sheet for surface joining according to the present invention, as the pre-placed filler metal, the two Al members can be precisely and easily joined together. Accordingly, the brazing sheet of the present invention can be used in an automated production line. Further, the brazing sheet according to the present invention permits an increase of freedom of choice in design of the product to be obtained, to effectively improve a heat exchange performance of a heat exchanger to be produced, and to advantageously improve a fatigue strength of a structural component to be produced, for example.

### BRIEF DESCRIPTION OF THE DRAWINGS

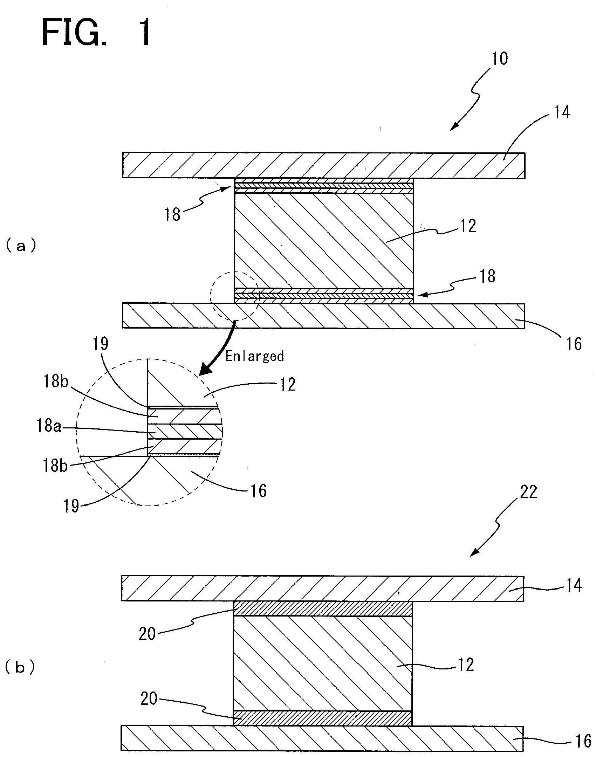

Figs. 1 are schematic cross sectional views showing an example of a step of a brazing process using a flux, not in accordance with the present invention, which process is practiced by using a brazing sheet for surface joining, in which Fig. 1(a) is the schematic cross sectional view showing an example of a stack in which the brazing sheet is placed at each of joint interfaces between Al members to be joined together, and Fig. 1(b) is the schematic cross sectional view showing a product obtained by subjecting the stack to the brazing process;

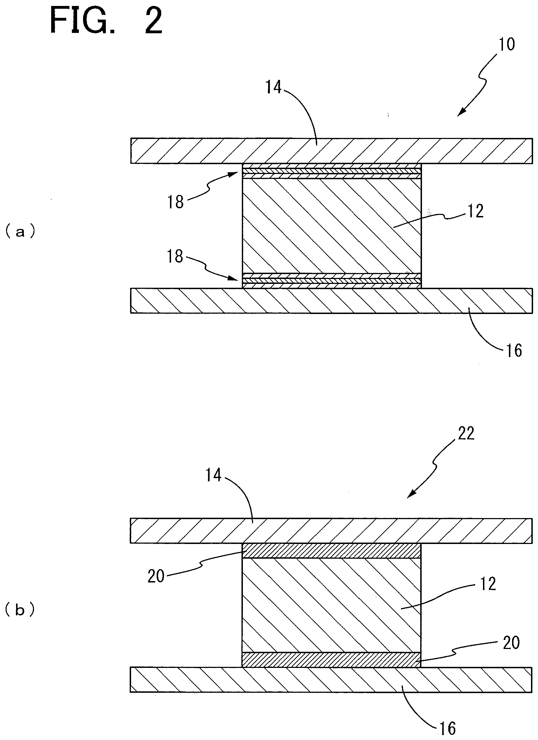

Figs. 2 are schematic cross sectional views showing an example of a step of a fluxless brazing process practiced by using the brazing sheet for surface joining, without using a flux practiced in an inert gas atmosphere in which Fig. 2(a) is the schematic cross sectional view showing an example of a stack in which the brazing sheet is placed at each of the joint interfaces between the Al members to be joined together, and Fig. 2(b) is the schematic cross sectional view showing a product obtained by subjecting the stack to the brazing process;

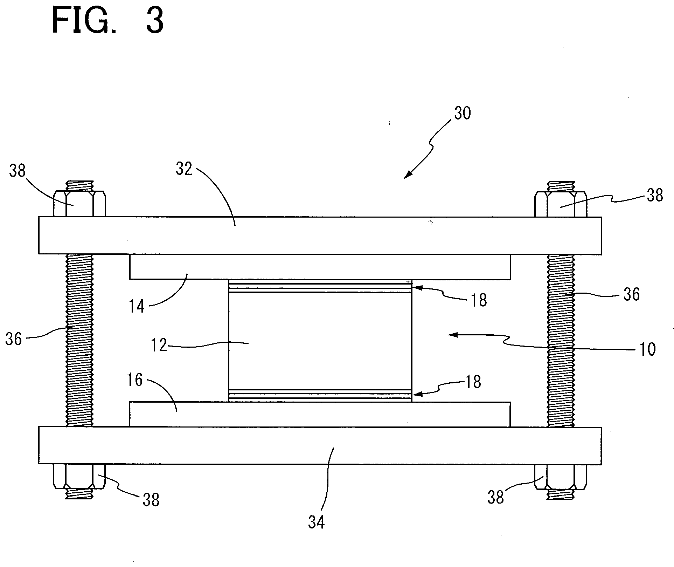

Fig. 3 is a schematic front elevational view showing an example of a pressing jig used for applying a pressing force to the stacks shown in Figs. 1 and 2;
Figs. 4 are schematic cross sectional views showing an example of a step of a brazing process using a flux practiced in an inert gas atmosphere, which process is practiced by using only a filler metal in the form of a sheet as a pre-placed filler metal, in which Fig. 4(a) is the schematic cross sectional view showing an example of a stack in which the filler metal is placed at each of the joint interfaces between the Al members to be joined together, and Fig. 4(b) is the schematic cross sectional view showing a product obtained by subjecting the stack to the brazing process; and
Figs. 5 are schematic cross sectional views showing an example of a step of a fluxless brazing process practiced in an inert gas atmosphere, practiced by using only a filler metal in the form of a sheet as the pre-placed filler metal, and without using a flux, in which Fig. 5(a) is the schematic cross sectional view showing an example of a stack in which the filler metal is placed at each of the joint interfaces between the Al members to be joined together, and Fig. 5(b) is the schematic cross sectional view showing a product obtained by subjecting the stack to the brazing process.

### MODES FOR CARRYING OUT THE INVENTION

A brazing sheet for surface joining according to the present invention, which is used as a pre-placed filler metal in a surface-joining operation performed to join together two Al members, and placed at a joint interface between the two Al members, is essentially different from the conventional filler metal which is used alone in the form of a sheet, in the following points. Namely, entire surfaces of the conventional filler metal are covered with oxide films. On the other hand, in the brazing sheet according to the present invention, a substantially half portion of its surfaces (one of its opposite major surfaces) of a filler metal (a skin material) is metallurgically bonded to a core material.

In a brazing process practiced by using the conventional filler metal in the form of a sheet alone, joining starts at points where the oxide films covering the surfaces of the filler metal are destructed. The molten filler metal is pulled toward those joining start points, and joining preferentially proceeds around the joining start points, and joined areas expand from those joining start points. In this respect, it is noted that in the brazing processes shown in Figs. 4 and 5, joining does not necessarily start at corresponding positions on respective upper and lower members (42, 42), so that directions of flows of the molten filler metal vary depending on the positions of the joining start points. The molten filler metal covered with the oxide films is pulled toward a plurality of the joining start points, and unevenly flows over the joint interface, resulting in local deficiency of the molten filler metal and an increase of a risk of occurrence of joint defects.

In a brazing process using a flux, an increase of an amount of the flux applied to the Al members to be joined together is considered as advantageous means for improving bondability between brazed surfaces of the Al members. However, the increase of the amount of the flux gives rise to a problem of an increase of voids generated by the vaporized flux in brazed (joined) portions. It is difficult to completely eliminate those voids even by increasing a pressing force applied to the Al members during the brazing process to hold together the Al members. Further, where the amount of the flux is reduced in order to reduce the voids, there arises a problem of joint defects caused by uneven flows of the molten filler metal, particularly in the case where the filler metal is used alone.

On the other hand, where the brazing sheet for surface joining according to the present invention is used, the ways in which the joining start points are generated and the joined areas expand are similar to those described above with respect to the process using the filler metal alone. However, the molten filler metal of the brazing sheet according to the present invention has already been metallurgically bonded to the core material on the side far from the Al members to be joined together, so that in the state where the filler metal is molten, entire surfaces of the core material are wetted. Therefore, the molten filler metal more slowly flows toward the joining start points, as compared with the case where the filler metal is used alone. In this respect, it is noted that where a Si content in the filler metal is similar to that of an eutectic composition, an effect of preventing the flows of the molten filler metal toward the joining start points is not sufficiently exhibited, giving rise to a risk of generation of local unjoined areas. The inventors of the present invention conducted various brazing tests, and confirmed that the uneven flows of the molten filler metal cannot be completely prevented by using a JIS A4045 alloy (Si content: 9-11% by mass) and a JIS A4343 alloy (Si content: 6.8-8.2% by mass), which are conventionally used as the filler metal, as well as by using a JIS A4047 alloy (Si content: 11-13% by mass) having the eutectic composition. Conversely, it can be said that where the filler metal having a generally used composition and a practical degree of fluidity is used, the molten filler metal inevitably flows toward the joining start points.

The inventors of the present invention found that in order to surely perform surface joining without causing joint defects while securing the amount of the filler metal required for joining, it is necessary to reduce the Si content in the filler metal to a value below a practically used range. The inventors made further studies and found that it is effective to use a filler metal consisting of an aluminum alloy having a basic composition consisting of 3.5-6.5% by mass of Si and the balance of aluminum and inevitable impurities, and to form an aluminum brazing sheet for surface joining by cladding the above-described filler metal on each of opposite surfaces of an Al core material consisting of aluminum or an aluminum alloy. Where the Si content in the filler metal of the aluminum brazing sheet is lower than 3.5% by mass, the amount of the molten filler metal becomes insufficient, giving rise to a problem of considerable deterioration of the function of the filler metal, for example. On the other hand, where the Si content is higher than 6.5% by mass, the effect of preventing the molten filler metal from flowing toward the joining start points is not sufficiently exhibited, giving rise to a problem of an increase of a risk of generation of a large-sized unjoined area.

In production of the brazing sheet for surface joining according to the present invention, means described below may be adopted for the purposes of increasing the number of the joining start points, and improving bondability between the brazed surfaces, for example. Namely, it is possible to adopt the means such as: control of the size of Si particles in the filler metal; addition of small amounts of Li, Be, Ca, Mg, Bi and the like to the filler metal; addition of Cu and Zn to the filler metal in order to control a melting point of the filler metal; and addition of Mg to the core material. The above-described means do not affect essential effects of the present invention, which are achieved by the control of the Si content in the filler metal, and a control of a clad percentage which will be described later. The above-described means are secondary means adopted depending on the intended application of the brazing sheet.

For the brazing sheet for surface joining according to the present invention using a fluxless brazing process practiced in an inert gas atmosphere, an aluminum alloy containing at least one of 0.004-0.1% by mass of Li, 0.002-0.05% by mass of Be, 0.05-0.4% by mass of Mg and 0.004-0.2% by mass of Bi, together with 3.5-6.5% by mass of Si described above, is used as the filler metal cladded on each of the opposite surfaces of the Al core material consisting of the aluminum or aluminum alloy. Where the above-indicated alloy components are contained in the filler metal, the oxide films covering the surfaces of the filler metal can be more effectively destructed, to advantageously achieve a sound state of surface joining of the Al members.

Where the contents of the above-indicated alloy components Li, Be and Mg in the filler metal are lower than the above-indicated respective lower limits, the oxide films covering the surfaces of the filler metal cannot be effectively destructed, giving rise to a problem of difficulty to sufficiently achieve the object of the present invention. On the other hand, where the contents of the above-indicated alloy components Li, Be and Mg in the filler metal are higher than the above-indicated respective upper limits, oxides of those alloy components, such as Li₂O, BeO and MgO are excessively formed, giving rise to a problem of deterioration of bondability between the brazed surfaces.

Further, the presence of Bi together with the above-indicated alloy components (Li, Be and Mg) reduces the surface tension of the molten filler metal advantageously, to improve bondability between the brazed surfaces. Where the Bi content in the filler metal is lower than 0.004% by mass, the surface tension of the molten filler metal cannot be sufficiently reduced, so that the improvement of bondability between the brazed surfaces cannot be expected. On
the other hand, the Bi content higher than 0.2% by mass results in a considerable change in the color of the filler metal and a failure to improve bondability between the brazed surfaces.

In the brazing sheet for surface joining to be used for the above-described fluxless brazing process according to the invention, the core material preferably consists of an aluminum alloy containing Mg as an alloy component, for thereby making the oxide films covering the surfaces of the filler metal brittle and easy to be destructed. Where the Mg content in the aluminum alloy is lower than 0.2% by mass, the oxide films covering the surfaces of the filler metal cannot be made sufficiently brittle. On the other hand, the Mg content higher than 1.6% by mass results in excessive formation of an oxide, i.e. MgO on the surfaces of the filler metal, leading to deterioration of bondability between the brazed surfaces. Accordingly, the Mg content in the aluminum alloy is preferably held within a range of 0.2-1.6% by mass.

By the way, in the case where horizontal surfaces are joined together by using the aluminum brazing sheet obtained by cladding the filler metal consisting of the Al-Si alloy having the above-described composition on the Al core material, melting of the filler metal begins at an eutectic temperature (577°C) of Al-Si, even where the Si content in the filler metal is as low as about 5% by mass, for example. However, in the filler metal having such a low Si content, the molten filler metal is surrounded by an unmolten portion of the filler metal in a solid phase, so that the molten filler metal does not easily flow. Accordingly, when the joining start points are generated, a large amount of flow of the molten filler metal toward the joining start points does not take place. As a result, the joining start points are generated all over the joint interface, along with an increase of the temperature, and expansion of the joined arears is caused by flows of the molten filler metal moving in the vertical direction by an extremely short distance, rather than flows of the molten filler metal in the horizontal direction. In other words, the molten filler metal existing in inner portions of layers of the filler metal moves in the vertical direction toward the joining start points, whereby joining proceeds and the joined areas expand. In the present invention, the expansion of the joined areas caused by the flows of the molten filler metal in the vertical direction is essential to realize surface joining of the Al members without joint defects.

An extremely small thickness of the layers of the filler metal (the skin material) of the brazing sheet results in deficiency (lack) of the filler metal supplied from the inner portions of the layers, and a failure to sufficiently expand the joined areas. In this respect, it is noted that most of the conventional brazing sheets are produced with a clad percentage of the skin material (the filler metal) of lower than 20%, so that in the conventional brazing sheet which has a thickness of 50µm and which is widely used as the pre-placed filler metal for surface joining, the thickness of the filler metal layer is not larger than 10µm. Accordingly, although the number of the Si particles contained in the filler metal layer depends on the size of the Si particles, not more than a few Si particles are present in the thickness direction of the filler metal layer. Therefore, where the conventional brazing sheet is used, almost no flows (supply) of the molten filler metal in the thickness direction of its layer is expected. In the present invention, the filler metal (the skin material) is cladded on each of the opposite surfaces of the core material consisting of the aluminum or aluminum alloy, such that the clad percentage of each layer of the filler metal is not lower than 35%, to permit the flows (supply) of the molten filler metal in the thickness direction of its layer, whereby the joined areas can effectively expand, to advantageously form the sound surface-joined portions without joint defects.

In order to compensate for a deficiency of the filler metal, it is considered to hold together the Al members with an increased pressing force. However, in the case where the brazing sheet having thin filler metal layers is used, an effect achieved by an increase of the pressing force is limited. Further, the increase of the pressing force is usually avoided since it results in an increase of a cost of a jig, and a consequent increase of the production cost. However, the brazing sheet for surface joining according to the present invention assures an improvement of bondability between the brazed surfaces without
the increase of the required pressing force. Therefore, the brazing sheet according to the present invention significantly contributes to production of precision products.

Bondability between the brazed surfaces obtained by the fluxless brazing process practiced in the inert gas atmosphere is inferior to that obtained by the brazing process using the flux. In the fluxless brazing process, the joining start points are difficult to be generated, and more likely to be unevenly distributed over the joint interface, than in the brazing process using the flux. Accordingly, the uneven flows of the molten filler metal toward the joining start points are more remarkable in the fluxless brazing process than in the brazing process using the flux. Therefore, in the fluxless brazing process, use of the brazing sheet as the pre-placed filler metal is more preferred than use of the filler metal alone. Thus, the brazing sheet according to the present invention has higher utility in the fluxless brazing process than in the brazing process using the flux.

The Al core material of the aluminum brazing sheet for surface joining according to the present invention, the opposite surfaces of which are covered with the above-described filler metal, can be formed of various known aluminum and aluminum alloys such as 1000 series aluminum and 2000-8000 series aluminum alloys according to JIS(Japanese Industrial Standards), which are used as the core material of the conventional brazing sheet. In the aluminum brazing sheet, the Al core material takes the form of a sheet continuously extending between the skin materials which are constituted by the filler metal and which are integrally cladded on the respective opposite surfaces of the Al core material. Although a clad percentage of the Al core material is adequately selected taking account of the clad percentage of the skin materials (the filler metal layers), which is specified by the present invention, the clad percentage of the Al core material is generally held within a range of 5-30%. Where the clad percentage of the Al core material is lower than 5%, there arises a risk of fracture of the Al core material during a clad-rolling operation, so that it is difficult to form the Al core material as the continuously extending sheet. On the other hand, where the clad percentage of the Al core material is higher than 30%, the clad percentage of each of the filler metal layers (the skin materials) cladded on the respective opposite surfaces of the Al core material is lower than 35%, so that there arises a problem in terms of the flows of the molten filler metal during the brazing operation.

In the aluminum brazing sheet for surface joining according to the present invention, the skin materials constituted by the filler metal are formed on the respective opposite surfaces of the core material, such that the clad percentage of each of the skin materials is not lower than 35%. Accordingly, it is difficult to produce the aluminum brazing sheet according to the present invention by a conventional cladding process. Therefore, in the present invention, the intended aluminum brazing sheet is produced by processes for obtaining clad materials described below, which processes are proposed by the inventors of the present invention. For example, it is possible to employ: a process disclosed in JP-A-2013-220435, in which a metallic powder or a metallic sheet having a low melting point is interposed between the core material and the filler metal, and the thus obtained stack of the core material and the filler metal is joined together by heating, and then subjected to a hot rolling operation to obtain an aluminum clad material; a process disclosed in Japanese Patent Application No.2014-71289, in which an auxiliary Al coupling member which is constituted by flat-woven Al wire cloth (netting), twill-woven Al wire cloth or the like, and which has thick portions in the form of spots, is placed at a joint interface between the core material and the filler metal, and the thus obtained stack of the core material and the filler metal is subjected to a hot rolling operation to obtain a clad material; and a process disclosed in Japanese Patent Application No.2014-101132, in which a soft Al sheet having a small thickness is interposed between the core material and the filler metal, together with the above-described auxiliary Al coupling member, and the thus obtained stack of the core material and the filler metal is subjected to a hot rolling operation. The cladding processes described above permit production of the intended aluminum brazing sheet with an industrially required degree of stability. However, the cladding process for producing the aluminum brazing sheet according to the present invention is not limited to those described above, and the brazing sheet may be produced by any cladding process, as long as the process permits production of the brazing sheet with the clad percentage of the filler metal of not lower than 35%.

Although the thickness of the brazing sheet for surface joining according to the present invention is adequately determined depending on forms, dimensions and the like of the two Al members to be joined together, the thickness of the brazing sheet is generally held within a range of 0.05-3mm. The brazing sheet having the thickness of 0.05-1.6mm is advantageously used in the brazing operation performed to join together components of a heat exchanger for an automobile.

A fluxless brazing process practiced in an inert gas atmosphere is used to join together the two Al members by using the brazing sheet for surface joining according to the present invention. For example, the two Al members are joined together by placing the brazing sheet at the joint interface between the two Al members, and subjecting the thus obtained stack of the Al members and the brazing sheet, in a brazing furnace, to a generally employed brazing process without using the flux in the inert gas atmosphere. In the brazing operation, the stack in which the two Al members to be joined together are superposed on respective opposite surfaces of the brazing sheet is held with a suitable jig and heated while a predetermined pressing force is applied to the stack, whereby the two Al members are joined together by brazing.

For instance, where the fluxless brazing process is practiced by using the brazing sheets 18 whose surfaces are not coated with the flux, as the pre-placed filler metal of the stack 10, as shown in Fig. 2(a), the sound surface-joined portions 20 and 20 are advantageously formed between the Al members 12 and 14 and between the Al members 12 and 16, without joint defects, as shown in Fig. 2(b), by subjecting the stack 10 to the heating and brazing operation in the inert gas.

In this respect, it is noted that a suitable pressing force is applied to the stacks shown in Figs. 1 and 2 during the brazing operation, by using a pressing jig 30 shown in Fig. 3, for example. Namely, the stack 10 is disposed so as to be interposed between upper and lower pressing plates 32 and 34 of the pressing jig 30, and pressure-held with screws 36 and nuts 38, to easily perform the brazing operation while applying the desired pressing force to the stack 10.

By using the brazing sheet according to the present invention for surface joining of the two Al members, precision of the surface-joined portions of the obtained product 22 can be effectively improved, and productivity of the product 22 can be advantageously improved, whereby freedom of choice in design of the product is increased. Thus, the brazing sheet according to the present invention considerably contributes to production of products which include surface-joined portions having high degrees of precision and strength, and which cannot be produced by the conventional technique.

### EXAMPLES

Some examples of the present invention will be described to clarify the invention more specifically. However, it is to be understood that the present invention is not limited to the details of the illustrated examples. It is emphasized that the brazing processes including a flux or those processes under vacuum are cited as reference examples only and are not part of the invention.

Initially, as one of Al members to be joined together by a brazing operation while the Al members are pressed in the state shown in Fig. 3, an intermediate member (12) in the form of a block was provided by machining an Al extruded material formed of JIS A1000 aluminum into the block having the dimensions of 20mm x 80mm x 80mm. As each of the other Al members to be joined together, an Al member (14, 16) was provided by cutting an Al sheet formed of JIS A1050 aluminum by a cold rolling operation and having a thickness of 2mm, into a sheet having the dimensions of 160mm x 160mm. Both of the two kinds of Al members were annealed to an O-temper condition.

On the other hand, various kinds of brazing sheets (18) to be used for brazing tests were formed by using various kinds of aluminum alloys containing respective alloy components indicated in Tables 1 and 2 given below, such that the brazing sheets (18) have a thickness of 0.05mm, a length of 80mm and a width of 80mm. Specifically described, Al core materials having a thickness of 5-25mm were sliced from ingots of the respective aluminum alloys, and filler metals having a thickness of 12.5-22.5mm were provided by facing ingots of the respective aluminum alloys and subjecting the faced ingots to a hot rolling operation. The Al core materials and the filler metals were combined with each other to give clad percentages indicated in Tables 1 and 2, and stacked together such that the filler metals are superposed on respective opposite surfaces of the Al core material. Further, a powder (particle diameter: 70-150µm) of an Al-Si-Zn alloy containing 6% by mass of Si and 15% by mass of Zn was uniformly dispersed at interfaces between the core material and the filler metals. Each of the thus obtained stacks was heated in a heating furnace at a temperature of 565°C for one hour, while being clamped with a jig, to cause a melting and diffusion bonding between the core material and the filler metals at their joint interfaces. Then, the stack was subjected to a hot rolling operation at 480°C, and further subjected to a cold rolling operation, such that the thickness of the stack is reduced to 0.05mm. After the cold rolling operation, the stack was heated at 360°C for two hours, to anneal the stack to the O-temper condition. Then, the stack was cut into the intended brazing sheet having the dimensions of 80mm x 80mm.

As comparative pre-placed filler metals, sheets consisting solely of the filler metals were provided by subjecting ingots of the respective aluminum alloys having the compositions indicated in Table 2 to the conventional hot rolling operation and the conventional cold rolling operation, to obtain sheets having a thickness of 0.05mm, and annealing the thus obtained sheets to the O-temper condition, and then cutting each of the annealed sheets into a sheet having the dimensions of 80mm x 80mm.

**Table 1**

| Brazing Test | Brazing Sheet | Alloy Components(% by mass) | | | | | | Clad Percentage (%) |
|---|---|---|---|---|---|---|---|---|
| | | Si | Mn | Mg | Li | Be | Bi | |
| 1 | Filler Metal | 3.5 | - | - | - | - | - | 45 |
| | Core Material | - | 1.2 | - | - | - | - | 10 |
| | Filler Metal | 3.5 | - | - | - | - | - | 45 |
| 2 | Filler Metal | 5 | - | - | - | - | - | 40 |
| | Core Material | - | 1.2 | - | - | - | - | 20 |
| | Filler Metal | 5 | - | - | - | - | - | 40 |
| 3 | Filler Metal | 6.5 | - | - | - | - | - | 35 |
| | Core Material | - | 1.2 | - | - | - | - | 30 |
| | Filler Metal | 6.5 | - | - | - | - | - | 35 |
| 4 | Filler Metal | 4.5 | - | 0.1 | - | - | - | 40 |
| | Core Material | - | 1.2 | - | - | - | - | 20 |
| | Filler Metal | 4.5 | - | 0.1 | - | - | - | 40 |
| 5¹ | Filler Metal | 4.5 | - | 1.6 | - | - | - | 40 |
| | Core Material | - | 1.2 | - | - | - | - | 20 |
| | Filler Metal | 4.5 | - | 1.6 | - | - | - | 40 |
| 6 | Filler Metal | 4.5 | - | 0.4 | - | - | 0.02 | 40 |
| | Core Material | 0.4 | - | - | - | - | - | 20 |
| | Filler Metal | 4.5 | - | 0.4 | - | - | 0.02 | 40 |
| 7 | Filler Metal | 4.5 | - | 0.4 | - | - | 0.02 | 40 |
| | Core Material | 0.4 | - | - | - | - | - | 20 |
| | Filler Metal | 4.5 | - | 0.4 | - | - | 0.02 | 40 |
| 8 | Filler Metal | 4.5 | - | - | 0.01 | - | 0.02 | 40 |
| | Core Material | 0.4 | - | - | - | - | - | 20 |
| | Filler Metal | 4.5 | - | - | 0.01 | - | 0.02 | 40 |
| 9 | Filler Metal | 4.5 | - | - | - | 0.01 | 0.02 | 40 |
| | Core Material | 0.4 | - | 0.6 | - | - | - | 20 |
| | Filler Metal | 4.5 | - | - | - | 0.01 | 0.02 | 40 |

| | | | | | | | | |
|---|---|---|---|---|---|---|---|---|
| = comparative example | | | | | | | | |

**Table 2**

| Brazing Test | Brazing Sheet | Alloy Components (% by mass) | | | | | | Clad Percentage (%) |
|---|---|---|---|---|---|---|---|---|
| | | Si | Mn | Mg | Li | Be | Bi | |
| 10¹ | Filler Metal Only | 12 | - | - | - | - | - | - |
| 11¹ | Filler Metal Only | 12 | - | - | - | - | - | - |
| 12¹ | Filler Metal | 2.5 | - | - | - | - | - | 45 |
| | Core Material | - | 1.2 | - | - | - | - | 10 |
| | Filler Metal | 2.5 | - | - | - | - | - | 45 |
| 13¹ | Filler Metal | 7.5 | - | - | - | - | - | 35 |
| | Core Material | - | 1.2 | - | - | - | - | 30 |
| | Filler Metal | 7.5 | - | - | - | - | - | 35 |
| 14¹ | Filler Metal | 5 | - | - | - | - | - | 25 |
| | Core Material | - | 1.2 | - | - | - | - | 50 |
| | Filler Metal | 5 | - | - | - | - | - | 25 |
| 15¹ | Filler Metal Only | 12 | - | 1.5 | - | - | - | - |
| 16 | Filler Metal | 6.5 | - | 0.05 | - | - | - | 40 |
| | Core Material | - | 1.2 | - | - | - | - | 20 |
| | Filler Metal | 6.5 | - | 0.05 | - | - | - | 40 |
| 17¹ | Filler Metal | 6.5 | - | 2 | - | - | - | 40 |
| | Core Material | - | 1.2 | - | - | - | - | 20 |
| | Filler Metal | 6.5 | - | 2 | - | - | - | 40 |
| 18¹ | Filler Metal Only | 12 | - | 0.4 | - | - | 0.02 | - |

| | | | | | | | | |
|---|---|---|---|---|---|---|---|---|
| ¹ = comparative example | | | | | | | | |

The thus provided intermediate member (12), Al members (14 and 16) and brazing sheets (18) to be used as the pre-placed filler metals were subjected to a degreasing treatment using acetone, and then subjected to the brazing tests. Each brazing test was conducted by employing a brazing process using a fluoride-based flux, a vacuum brazing process or a fluxless brazing process practiced in a nitrogen gas, as described below.

In the brazing process using the fluoride-based flux, surfaces of the brazing sheets (18) as the pre-placed filler metals were coated with the fluoride (KF-AlF₃)-based flux in the form of an aqueous dispersion used in respective amounts indicated in Tables 3 and 4 given below. After the brazing sheets (18) were dried, the brazing sheets (18) were interposed between the intermediate member (12) and the Al members (14 and 16), whereby a stack (10) was obtained. The thus obtained stack (10) was set in a pressing jig (30) as shown in Fig. 3. In this respect, it is noted that the amounts of the flux were controlled so as to attain accuracy of ±10% in terms of the amounts of the flux determined by weighing the dried brazing sheets coated with the flux, by using an electronic balance. A brazing operation was performed by heating the stack (10) to 600°C in the nitrogen gas, while applying a predetermined pressing force to the stack set in the pressing jig (30). The temperature was increased from the room temperature to 600°C for about 20 minutes, and an oxygen concentration in the atmosphere within a heating furnace was held within a range of 15-20ppm during the brazing operation.

In the vacuum brazing process, the brazing sheets (18) which were not coated with the flux were interposed between the intermediate member (12) and the Al members (14 and 16), whereby the stack (10) was obtained. The brazing operation was performed by setting the stack (10) in the pressing jig (30) as shown in Fig. 3, accommodating the stack (10) within a vacuum furnace, and heating the stack to 600°C within the vacuum furnace, while applying the predetermined pressing force to the stack (10). The temperature was increased from the room temperature to 600°C for about 45 minutes, and a pressure within the vacuum furnace was held within a range of 5 x 10⁻³ - 8 x 10⁻³Pa during the brazing operation.

In the fluxless brazing process practiced in the nitrogen gas, an etching treatment was performed on the intermediate member (12), the Al members (14 and 16) and the brazing sheets (18), by immersing the intermediate member (12), the Al members (14 and 16) and the brazing sheets (18) in a 2% hydrofluoric acid solution for 60 seconds. The intermediate member (12), the Al members (14 and 16) and the brazing sheets (18) were dried with an air blow, and then assembled to form the stack (10) without coating the brazing sheets (18) with the flux. The stack (10) was set in the pressing jig (30) as shown in Fig. 3, and the brazing operation was performed by heating the stack (10) in a heating furnace charged with the nitrogen gas, under the same conditions as described above with respect to the brazing process using the fluoride-based flux, while the predetermined pressing force was applied to the stack (10).

A state of bonding between brazed surfaces of the thus obtained various kinds of products (22) was evaluated by conducting an ultrasonic inspection (a non-destructive inspection) and a cross-sectional observation (a destructive inspection) of the brazed surfaces. Evaluation results are indicated in Tables 3 and 4.

**Table 3**

| Brazing Test | Brazing Process | Amount of Flux (g/m²) | State of Bonding between Brazed Surfaces |
|---|---|---|---|
| 1 | Brazing Process Using Fluoride-based Flux | 1 | Good |
| 2 | Brazing Process Using Fluoride-based Flux | 1 | Good |
| 3 | Brazing Process Using Fluoride-based Flux | 1 | Good |
| 4 | Vacuum Brazing Process | - | Good |
| 5¹ | Vacuum Brazing Process | - | Good |
| 6 | Vacuum Brazing Process | - | Good |
| 7 | Fluxless Brazing Process in Nitrogen Gas | - | Good |
| 8 | Fluxless Brazing Process in Nitrogen Gas | - | Good |
| 9 | Fluxless Brazing Process in Nitrogen Gas | - | Good |

| | | | |
|---|---|---|---|
| ¹ = comparative example | | | |

**Table 4**

| Brazing Test | Brazing Process | Amount of Flux (g/m²) | State of Bonding Between Brazed Surfaces |
|---|---|---|---|
| 10¹ | Brazing Process Using Fluoride-based Flux | 1 | Many unjoined portions are present. |
| 11¹ | Brazing Process Using Fluoride-based Flux | 3 | Many voids are present. |
| 12¹ | Brazing Process Using Fluoride-based Flux | 1 | Many unjoined portions are present. |
| 13¹ | Brazing Process Using Fluoride-based Flux | 1 | Unjoined portions are present. |
| 14¹ | Brazing Process Using Fluoride-based Flux | 1 | Many unjoined portions are present. |
| 15¹ | Vacuum Brazing Process | - | Many unjoined portions are present. |
| 16 | Vacuum Brazing Process | - | Unjoined portions are present. |
| 17¹ | Vacuum Brazing Process | - | Unjoined portions are present. (A large amount of molten filler metal spread out of joint interfaces.) |
| 18¹ | Fluxless Brazing Process in Nitrogen Gas | - | Many unjoined portions are present. |

| | | | |
|---|---|---|---|
| ¹ = comparative example | | | |

As is apparent from the results indicated in Tables 3 and 4, it was confirmed that a good state of bonding between the brazed surfaces is achieved in the products (22) obtained in the brazing tests Nos. 1 to 3 wherein surface joining of the intermediate member (12) and the Al members (14 and 16) were performed by the brazing process using the fluoride-based flux, even though the fluoride-based flux was used in the small amount of 1g/m². Also, it was confirmed that a good state of bonding between the brazed surfaces is achieved in the products (22) obtained in the brazing tests Nos. 4-6 employing the vacuum brazing process, and in the brazing tests Nos. 7-9 employing the fluxless brazing process practiced in the nitrogen gas, in accordance with the invention.

On the other hand, in the brazing test No. 10 wherein the sheet of the filler metal consisting of the aluminum alloy was used alone, it was confirmed by the ultrasonic inspection that many unjoined portions were generated due to a small amount of use of the flux. Further, in the brazing test No. 11 wherein the amount of use of the flux is larger than that in the brazing test No. 10, presence of many joint defects was detected by the ultrasonic inspection, and it was confirmed by the cross-sectional observation that those joint defects are voids generated by the vaporized flux. The presence of many joint defects was also detected, by the ultrasonic inspection, in the brazing test No. 15 wherein the vacuum brazing process was practiced by using the sheet of the filler metal alone, and in the brazing test No. 18 wherein the fluxless brazing process was practiced in the nitrogen gas by using the sheet of the filler metal alone.

Further, it was recognized that many joint defects were caused in the brazing test No. 12, since an amount of the molten filler metal was insufficient due to an excessively small Si content in the filler metal of the brazing sheets (18). In the brazing test No. 13 wherein the Si content in the filler metal of the brazing sheets (18) is excessively large, it was recognized that unjoined portions were generated due to uneven flows of the molten filler metal. In the brazing test No. 14, it was recognized that the joint defects were caused since the amount of the filler metal was insufficient due to an excessively low clad percentage of the filler metal.

In the cases where the vacuum brazing process was employed, it was recognized that the unjoined portions were generated and sufficient bonding was not realized in the brazing test No. 16 wherein the Mg content in the filler metal of the brazing sheets (18) is excessively low. Further, in the brazing test No. 17 wherein the Mg content in the filler metal of the brazing sheets (18) is excessively large, it was recognized that wettability of the brazing sheets (18) was excessively high, so that the molten filler metal spread out of the joint interface, resulting in generation of the unjoined portions.

**NOMENCLATURE OF REFERENCE SIGNS**

| | |
|---|---|
| 10: Stack | 12. Al member in the form of a block |
| 14, 16: Al members in the form of sheets | |
| 18: Brazing sheet | |
| 18a: Core material | 18b: Filler metal |
| 20: Surface-joined portion | 22: Product |
| 30: Pressing jig | 32, 34: Pressing plates |
| 36: Screw | 38: Nut |

## Claims

1. A brazing sheet (18) for surface joining configured to be placed at a joint interface between two Al members (12 and 14, 16) in order to join together the two Al members by a fluxless brazing process practiced in an inert gas atmosphere, **characterized in that**:
said brazing sheet (18) is an aluminum brazing sheet in which a filler metal (18b) is cladded on each of opposite surfaces of a core material (18a) consisting of aluminum or an aluminum alloy optionally containing 0.2-1.6% by mass of Mg;
the filler metal (18b) consists of an aluminum alloy consisting of 3.5-6.5% by mass of Si, at least one of 0.004-0.1% by mass of Li, 0.002-0.05% by mass of Be, 0.05-0.4% by mass of Mg and 0.004-0.2% by mass of Bi, and the balance of aluminum and inevitable impurities; and
a clad percentage of the filler metal (18b) cladded on each of the opposite surfaces of the core material (18a) is not lower than 35%.

2. The brazing sheet for surface joining according to claim 1, wherein a clad percentage of the core material (18a) is 5-30%.

3. A brazing process for surface joining two Al members by using the brazing sheet according to claim 1 or claim 2.

## Patentansprüche

1. Hartlötblech (18) zum Oberflächenverbinden, das dafür konfiguriert ist, an einer Verbindungsgrenzfläche zwischen zwei Al-Elementen (12 und 14, 16) angeordnet zu werden, um die zwei Al-Elemente durch einen flussmittelfreien Lötprozess zu verbinden, der in einer Inertgasatmosphäre ausgeführt wird, **dadurch gekennzeichnet, dass**:
das genannte Hartlötblech (18) ein Aluminiumhartlötblech ist, bei dem ein Füllmetall (18b) auf jeder der gegenüberliegenden Oberflächen eines Kernmaterials (18a) aus Aluminium oder einer Aluminiumlegierung, die gegebenenfalls 0,2-1,6 Masse-% Mg enthält, plattiert wird;
das Füllmetall (18b) aus Folgendem besteht: einer Aluminiumlegierung, die aus 3,5-6,5 Masse-% Si, mindestens 0,004-0,1 Masse-% Li, 0,002-0,05 Masse-% Be, 0,05-0,4 Masse-% Mg und 0,004-0,2 Masse-% Bi besteht, und dem Rest aus Aluminium und unvermeidbaren Verunreinigungen; und
ein Plattierungsprozentsatz des Füllmetalls (18b), der auf jeder der gegenüberliegenden Oberflächen des Kernmaterials (18a) plattiert ist, nicht weniger als 35 % beträgt.

2. Hartlötblech zum Oberflächenverbinden nach Anspruch 1, wobei ein Plattierungsanteil des Kernmaterials (18a) 5-30% beträgt.

3. Hartlötverfahren zum Oberflächenverbinden zweier Al-Elemente unter Verwendung des Hartlötblechs nach Anspruch 1 oder Anspruch 2.

## Revendications

1. Feuille de brasage (18) pour l'assemblage de surfaces, configurée pour être placée au niveau d'une interface de joint entre deux éléments d'Al (12 et 14, 16) afin de joindre ensemble les deux éléments d'Al par un procédé de brasage sans flux pratiqué dans une atmosphère de gaz inerte, **caractérisé en ce que** :
ladite feuille de brasage (18) est une feuille de brasage en aluminium dans laquelle un métal d'apport (18b) est plaqué sur chacune des surfaces opposées d'un matériau d'âme (18a) constitué d'aluminium ou d'un alliage d'aluminium contenant de 0,2 à 1,6 % en masse de Mg ;
le métal d'apport (18b) est constitué d'un alliage d'aluminium constitué de 3,5 à 6,5 % en masse de Si, d'au moins l'un de 0,004 à 0,1 % en masse de Li, de 0,002 à 0,05 % en masse de Be, de 0,05 à 0,4 % en masse de Mg et de 0,004 à 0,2 % en masse de Bi, et le reste d'aluminium et d'impuretés inévitables ; et
un pourcentage de placage du métal d'apport (18b) plaqué sur chacune des surfaces opposées du matériau d'âme (18a) n'est pas inférieur à 35 %.

2. Feuille de brasage pour un assemblage de surfaces selon la revendication 1, dans laquelle un pourcentage de placage du matériau d'âme (18a) est compris entre 5 et 30 %.

3. Procédé de brasage pour l'assemblage de surfaces de deux éléments d'Al en utilisant la feuille de brasage selon la revendication 1 ou la revendication 2.
